# EUROPÄISCHE PATENTANMELDUNG

(11) **EP 3 620 089 A1**
(43) Veröffentlichungstag der Anmeldung: **11.03.2020**
(21) Anmeldenummer: 19192431.5
(22) Anmeldetag: 20.08.2019
(51) Int. Cl.: A47J 45/06

(54) **BESCHLAGTEIL ZUR BEFESTIGUNG AN EINEM KOCH- ODER BRATGEFÄSS**

(30) Priorität: 05.09.2018 DE 102018121661
(71) Anmelder: Baumgarten Handle Systems KG, 57290 Neunkirchen (DE)
(72) Erfinder: BESCHE, Michael, 57518 Betzdorf (DE); KLAUS, Stefan, 57234 Wilnsdorf (DE)
(74) Vertreter: advotec.

(57) **Zusammenfassung**

Die Erfindung betrifft ein Beschlagteil (04) zur Befestigung eines Griffelements an der Gefäßwandung (02) eines Koch- oder Bratgefäßes (01), mit einem Grundkörper (07), der mit einer Ausnehmung an einem an der Gefäßwandung (02) vorgesehenen Tragteil (03) aufgesteckt werden kann, wobei in der Ausnehmung des Grundkörpers (07) eine Befestigungseinrichtung vorgesehenen ist, mit der der Grundkörper (07) am Tragteil (03) festgelegt werden kann, und wobei die Befestigungseinrichtung an zumindest einer Gussoberfläche des Tragteils (03) und/oder an zumindest einer Gussoberfläche des Grundkörpers (07) fixierend zum Eingriff kommt, wobei die Befestigungseinrichtung zumindest eine elastisch verformbaren Druckfeder (09, 10) umfasst, die ein wellenförmiges Profil aufweist, wobei die gegenüberliegenden Seiten des wellenförmigen Profils einerseits am Tragteil (03) und anderseits an der Innenseite der Ausnehmung im Grundkörper (07) zur Anlage kommen, und wobei die Druckfeder (09, 10) den Grundkörper (07) am Tragteil (03) durch reibschlüssige Anlage an zumindest einer Gussoberfläche fixiert.

## Beschreibung

Die Erfindung betrifft ein Beschlagteil zur Befestigung an einem Koch- oder Bratgefäß nach dem Oberbegriff des Anspruchs 1.

Gattungsgemäße Beschlagteile werden beispielsweise an Töpfen, Kasserollen oder Pfannen befestigt und dienen dazu einen Griff oder Stehgriff mit der Gefäßwandung eines Koch- oder Bratgefäßes verbinden zu können. Um die getrennte Fertigung von Griffelement und dem eigentlichen Kochgerät zu ermöglichen, da beispielsweise unterschiedliche Materialien verwendet werden, ist es bei den aus dem Stand der Technik bekannten Lösungen notwendig, dass das Griffelement nachträglich an der Gefäßwandung befestigt wird. Zu dieser Befestigung des Griffelements an der Gefäßwandung dienen gattungsgemäße Beschlagteile.

Bei aus dem Stand der Technik bekannten Kochgeräten ist zur Befestigung des Griffelements ein Tragteil vorgesehen, auf das das Beschlagteil mit einer Ausnehmung in einem Grundkörper aufgeschoben wird, um die Haltekräfte zu übertragen. Im Grundkörper ist dazu eine Einführöffnung vorgesehen. Um das Abziehen des Griffelements vom Anschlusselement zuverlässig auszuschließen, ist bei gattungsgemäßen Kochgeräten ein Sicherungselement vorgesehen, das mit seinen Seitenwänden zwischen der Innenseite der Befestigungsöffnung und der Außenseite des Anschlusselements angeordnet ist. Dieses Sicherungselement weist zur Festlegung am Griffelement Widerhakenzähne auf, die sich beim Aufschieben des Griffelements auf das Anschlusselement in das Griffelement eingraben und dadurch eine form- und kraftschlüssige Verbindung herstellen.

Ein derart gestaltetes Kochbild mit einem Sicherungselement zur Befestigung des Griffelements auf dem Tragteil ist beispielsweise aus der EP 0 228 560 B1 bekannt. Nachteilig bei der dort beschriebenen Lösung ist es, dass ein sicherer Sitz des Sicherungselements nur gegeben ist, wenn die Ausnehmung im Grundkörper bzw. der Querschnitt des Tragteils mit entsprechend hoher Fertigungsqualität und Einhaltung entsprechend geringerer Fertigungstoleranzen gefertigt ist. Die Einhaltung der notwendigen Fertigungstoleranzen ist dabei insbesondere schwierig, wenn das Tragteil und/oder der Grundkörper des Beschlagteils als Gussteile gefertigt werden sollen. Denn die Gussteile weisen fertigungsbedingt relativ hohe Fertigungstoleranzen auf.

Ausgehend von diesem Stand der Technik ist es deshalb Aufgabe der vorliegenden Erfindung ein neues Beschlagteil zur Befestigung eines Griffelements an einer Gefäßwandung eines Koch- oder Bratgefäßes vorzuschlagen, das eine zuverlässige Befestigung des Griffelements auch unter Verwendung von Gussteilen in der Funktion des Tragteils bzw. des Grundkörpers erlaubt.

Diese Aufgabe wird durch ein Beschlagteil nach der Lehre des Anspruchs 1 gelöst.

Vorteilhafte Ausführungsformen der Erfindung sind Gegenstand der Unteransprüche.

Das erfindungsgemäße Beschlagteil beruht auf dem Grundgedanken, dass als Befestigungseinrichtung zur Fixierung des Grundkörpers des Beschlagteils am Tragteil des Koch- oder Bratgefäßes eine elastisch verformbare Druckfeder verwendet wird, die ein wellenförmiges Profil aufweist. Die beiden gegenüberliegenden Seiten des wellenförmigen Profils der Druckfeder kommen bei der Befestigung des Grundkörpers am Tragteil dabei einerseits am Tragteil und andererseits an der Innenseite der Ausnehmung zur Anlage. Die Fixierung des Grundkörpers am Tragteil erfolgt dabei durch die reibschlüssige Anlage der beiden Seiten der Druckfeder sowohl am Grundkörper als auch am Tragteil. Durch die wellenförmige Profilierung der Druckfeder können problemlos relativ große Fertigungstoleranzen ausgeglichen werden. Der Toleranzausgleich erfolgt dabei durch geeignete elastische Verformung des wellenförmig profilierten Druckfederkörpers.

Um ein Verdrehen des Griffelements relativ zur Gefäßwandung auszuschließen, ist es besonders vorteilhaft, wenn die Ausnehmung im Grundkörper des Beschlagteils einen prismatischen, insbesondere rechteckigen oder quadratischen Befestigungsquerschnitt aufweist. Sobald das Tragteil an der Gefäßwandung in diese prismatische Ausnehmung des Grundkörpers eingesteckt ist, kann der Grundkörper nicht mehr gegenüber der Gefäßwandung verdreht werden.

In welcher Weise die Befestigungseinrichtung mit der wellenförmig profilierten Druckfeder konstruktiv ausgebildet ist, ist grundsätzlich beliebig. Im Hinblick auf einen zuverlässigen Sitz des Grundkörpers am Tragteil durch Reibschluss ist es besonders vorteilhaft, wenn die Befestigungseinrichtung zwei Druckfederarme aufweist, die an den gegenüberliegenden Seiten des Tragteils reibschlüssig zur Anlage kommen können. Durch die gleichzeitige Ineingriffbringung der beiden Druckfederarme wird die zwischen Tragteil und Grundkörper wirkende Reibkraft verdoppelt. Außerdem kann der Toleranzausgleich ebenfalls im Wesentlichen verdoppelt werden, da beide wellenförmig profilierten Druckfederarme für den Toleranzausgleich unabhängig voneinander elastisch verformt werden können.

Um die beiden Druckfederarme möglichst einfach in der Ausnehmung des Grundkörpers montieren zu können, ist es besonders vorteilhaft, wenn die Druckfederarme durch einen Verbindungssteg miteinander verbunden sind und auf diese Weise eine U-förmige Federklammer bilden. Durch Montage der U-förmigen Federklammer können also problemlos zwei Druckfederarme gleichzeitig in der Ausnehmung positioniert werden.

Zur weiteren Erhöhung der zwischen Tragteil und Grundkörper des Beschlagteils wirkenden Befestigungskräfte können zwei U-förmige Federklammern gemeinsam die Befestigungseinrichtung bilden. Die vier Druckfederarme der beiden Federklammern kommen dabei an der gegenüberliegenden Seite des Tragteils reibschlüssig zur Anlage, so dass die insgesamt wirkenden Reibkräfte dem Vierfachen der an einem Druckfederarm alleine wirkenden Befestigungskraft entsprechen.

Im Hinblick auf eine einfache Befestigung der Federklammern am Grundkörper ist es vorteilhaft, wenn die freien Enden der Federklammern umgebogen sind. Auf diese Weise können die umgebogenen Enden dann an der zur Gefäßwandung weisenden Seite des Grundkörpers befestigt werden.

Eine sichere Befestigung der Federklammern am Grundkörper ergibt sich, wenn die freien Enden der Federklammern am Grundkörper angeschweißt sind. Um ein unerwünschtes Abziehen des Grundkörpers vom Tragteil zuverlässig ausschließen zu können, ist es vorteilhaft, wenn die Federklammern zusätzlich ein Sicherungselement umfassen, das in das Material des Tragteils zumindest geringfügig eingreift und die Federklammern formschlüssig am Tragteil fixieren. In welcher Weise das Sicherungselement zum formschlüssigen Fixieren des Grundkörpers am Tragteil ausgebildet ist, ist grundsätzlich beliebig. Gemäß einer bevorzugten Ausführungsform werden sogenannte Sicherungskrallen als Sicherungselement in die Federklammern integriert.

Gemäß einer bevorzugten Ausführungsvariante sollten die freien Enden der Sicherungskrallen bei der Montage des Tragteils im Grundkörper formschlüssig in die Oberfläche des Tragteils eingegraben werden.

Bevorzugt ist es dabei, dass die freien Enden der Sicherungskrallen unter einem Sperrwinkel von der Einführöffnung der Ausnehmung wegweisen.

Welche Art von Griffelement an dem Grundkörper des Beschlagteils befestigt wird, ist grundsätzlich beliebig. Gemäß einer bevorzugten Ausführungsvariante dient der Grundkörper zur Befestigung eines Stielgriffs an der Gefäßwandung des Koch- oder Bratgefäßes.

Erfindungsgemäß kann ein hoher Toleranzausgleich durch die wellenförmige Profilierung der erfindungsgemäß verwendeten Druckfedern erreicht werden. Dies ist insbesondere von Vorteil, wenn der Grundkörper oder das Tragteil in der Art eines Gussteils ausgebildet ist. Besonders vorteilhaft ist es, wenn sowohl der Grundkörper als auch das Tragteil in der Art eines Gussteils ausgebildet ist, da dann die auftretenden Maßtoleranzen und aufgrund zweier Gussteile besonders hoch sind.

Besonders kostengünstig lässt sich das Tragteil fertigen, wenn es einstückig an die Gefäßwandung des Koch- oder Bratgefäßes angeformt ist.

Eine Ausführungsform der Erfindung ist in den Zeichnungen schematisiert dargestellt und wird nachfolgend beispielhaft erläutert.

Es zeigen:
- **Fig. 1**: ein erfindungsgemäßes Beschlagteil bei Befestigung an dem Tragteil eines Bratgefäßes im perspektivischen Querschnitt;
- **Fig. 2**: das Beschlagteil mit dem Bratgefäß gemäß Fig. 1 im Querschnitt;
- **Fig. 3**: das Beschlagteil gemäß Fig. 1 im perspektivischen Querschnitt;
- **Fig. 4**: das Beschlagteil gemäß Fig. 3 im Querschnitt;
- **Fig. 5**: das Beschlagteil gemäß Fig. 3 in Ansicht von vorne;
- **Fig. 6**: die Federklammer zur Bildung des Beschlagteils gemäß Fig. 3 in Ansicht von oben;
- **Fig. 7**: die Federklammer gemäß Fig. 6 in seitlicher Ansicht;
- **Fig. 8**: die Federklammer gemäß Fig. 6 in Ansicht von vorne.

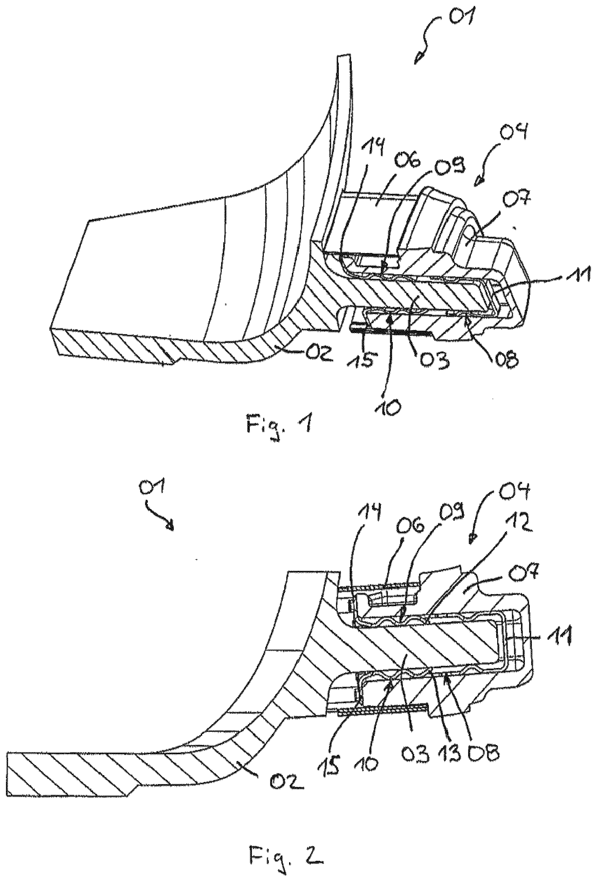

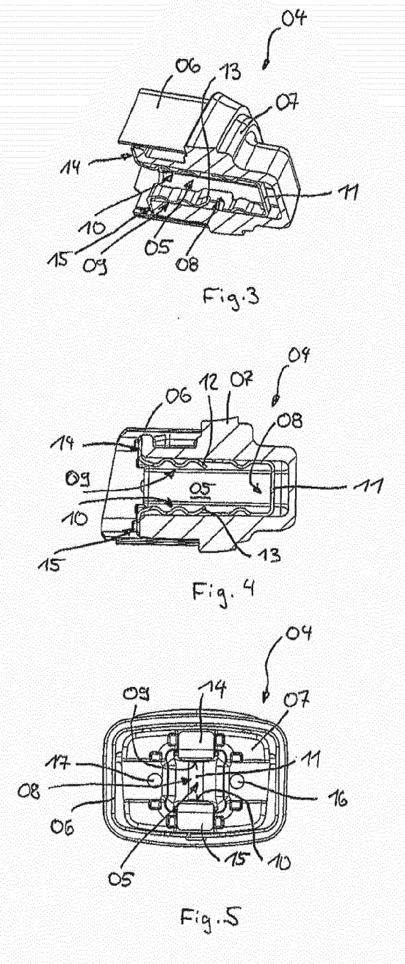

**Fig. 1** zeigt ein Bratgefäß 01 mit einer gegossenen Gefäßwandung 02, an die ein Tragteil 03 einstückig angegossen ist. Zur Befestigung eines in den Zeichnungen nicht dargestellten Stielgriffs an der Gefäßwandung 02 dient ein Beschlagteil 04, das mit einer Ausnehmung 05 (siehe Fig. 4) auf das Tragteil 03 aufgeschoben wird. Der Zwischenraum zwischen der Außenseite der Gefäßwandung 02 und dem Beschlagteil 04 wird zur Erhöhung der optischen Ästhetik mit einer Hülse 06 überdeckt.

Wie insbesondere aus **Fig. 2** ersichtlich, wird der Grundkörper 07 des Beschlagteils 04 mittels einer Federklammer 08 auf dem Tragteil 03 reib- und formschlüssig fixiert. Das Tragteil 03 weist dabei einen rechteckigen Querschnitt auf, der formkomplementär in der Ausnehmung 05 aufgenommen wird, so dass das Beschlagteil 04 und damit der daran befestigte Stilgriff nicht gegenüber der Gefäßwandung 02 verdreht werden kann. Da sowohl das Tragteil 03 als auch der Grundkörper 07 als Gussteile ausgebildet sind, ist ein hoher Maßtoleranzausgleich bei der form- und reibschlüssigen Befestigung des Grundkörpers 07 an dem Tragteil 03 erforderlich. Dieser hohe Maßausgleich wird durch Verwendung der Federklammer 08 dadurch erreicht, dass die Federklammer 08 zwei wellenförmig profilierte Druckfedern 09 und 10 umfasst, die durch einen Verbindungssteg 11 miteinander verbunden sind und dadurch die U-förmige Gestalt der Federklammer 08 bilden. Die wellenförmige Profilierung der Druckfedern 09 und 10 erlaubt es, dass sich die Druckfedern 09 beim Aufstecken des Grundkörpers 07 auf das Tragteil 03 soweit elastisch verformen, dass die Wellenspitzen sich unter Aufbringung eines relativ hohen Anpressdrucks an die Gussoberflächen des Grundkörpers 07 einerseits und des Tragteils 03 andererseits anlegen. Aufgrund der Verpressung der Druckfedern 09 und 10 wird dabei ein sehr starker Reibschluss zwischen Tragteil 03 und Grundkörper 07 vermittelt.

Um den Grundkörper 07 zusätzlich gegen Abziehen vom Tragteil 03 zu sichern, umfasst die Federklammer 08 zusätzlich zwei Sicherungselemente 12 bzw. 13, die sich beim Aufschieben des Grundkörpers 07 auf das Tragteil 03 formschlüssig in das Material des Tragteils 03 eingraben. Die Sicherungselemente 12 und 13 sind dabei in der Art von Sicherungskrallen ausgebildet, deren freien Enden unter einem Sperrwinkel von der Einführöffnung der Ausnehmung 05 wegweisen. Durch diesen Sperrwinkel wird erreicht, dass beim Versuch des Abziehens des Grundkörpers 07 vom Tragteil 03 sich die beiden Sicherungselemente 12 und 13 zunehmend in das Material des Tragteils 03 eingraben und somit ein unerwünschtes Abziehen zuverlässig ausschließen.

**Fig. 3** zeigt das Beschlagteil 04 im perspektivischen Querschnitt. Man erkennt das Sicherungselement 13, das durch Ausklinken des aus Stahlblech hergestellten Federklammerkörpers hergestellt ist.

**Fig. 4** zeigt das Beschlagteil 04 im Querschnitt. Die lichte Weite zwischen den nach innen weisenden Wellenbergen der Druckfedern 09 und 10 an der Federklammer 08 ist dabei kleiner als der Außenquerschnitt des Tragteils 03, so dass die Druckfedern 09 und 10 beim Aufschieben des Grundkörpers 07 auf das Tragteil 03 elastisch verformt werden und den gewünschten Reibschluss zwischen Tragteil 03 und Grundkörper 07 verursachen.

**Fig. 5** zeigt die Federklammer 08 mit den beiden Druckfedern 09 und 10 in Ansicht von vorne. Die freien Enden 14 bzw. 15 der beiden Druckfedern 09 und 10 sind dabei rechtwinklig umgebogen und können dadurch an der zur Gefäßwandung 02 weisenden Seite des Grundkörpers 07 zur Anlage kommen. Hier werden die beiden freien Enden 14 und 15 angeschweißt und dadurch die Lage der Federklammer 08 gesichert. Um die Befestigungskräfte zwischen Grundkörper 07 und Tragteil 03 noch weiter zu erhöhen, ist es möglich, dass zusätzlich zu der Federklammer 08 eine in den Zeichnungen nicht dargestellte zweite Federklammer 08 zusätzlich in der Ausnehmung 05 positioniert wird. Die zweite Federklammer 08 wird dabei um 90° gedreht zur ersten Federklammer 08 in der Ausnehmung 05 befestigt, so dass die freien Enden 14 und 15 der zweiten, nicht dargestellten Federklammer an den Befestigungspunkten 16 und 17 des Grundkörpers 07 angeschweißt werden müssen.

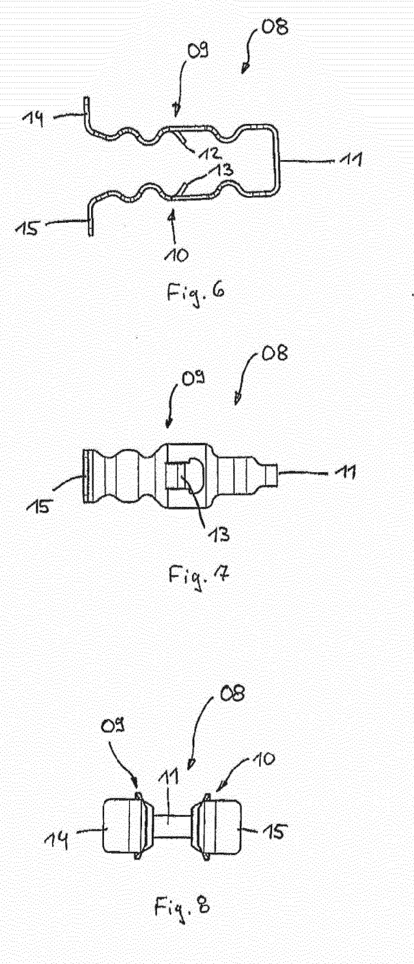

**Fig. 6** zeigt die Federklammer 08 mit den beiden wellenförmig profilierten Druckfedern 09 und 10, dem Verbindungssteg 11, den Sicherungselementen 12 und 13 und den beiden rechtwinklig abknickenden freien Enden 14 und 15 in Ansicht von oben.

**Fig. 7** zeigt die Federklammer 08 in seitlicher Ansicht und Fig. 8 zeigt die Federklammer 08 in Ansicht von vorne.

## Patentansprüche

1. Beschlagteil (04) zur Befestigung eines Griffelements an der Gefäßwandung (02) eines Koch- oder Bratgefäßes (01), mit einem Grundkörper (07), der mit einer Ausnehmung (05) an einem an der Gefäßwandung (02) vorgesehenen Tragteil (03) aufgesteckt werden kann, wobei in der Ausnehmung (05) des Grundkörpers (07) eine Befestigungseinrichtung vorgesehenen ist, mit der der Grundkörper (07) am Tragteil (03) festgelegt werden kann, und wobei die Befestigungseinrichtung an zumindest einer Gussoberfläche des Tragteils (03) und/oder an zumindest einer Gussoberfläche des Grundkörpers (07) fixierend zum Eingriff kommt,
**dadurch gekennzeichnet,**
**dass** die Befestigungseinrichtung zumindest eine elastisch verformbaren Druckfeder (09, 10) umfasst, die ein wellenförmiges Profil aufweist, wobei die gegenüberliegenden Seiten des wellenförmigen Profils einerseits am Tragteil (03) und anderseits an der Innenseite der Ausnehmung (05) im Grundkörper (07) zur Anlage kommen, und wobei die Druckfeder (09, 10) den Grundkörper (07) am Tragteil (03) durch reibschlüssige Anlage an zumindest einer Gussoberfläche fixiert.

2. Beschlagteil nach Anspruch 1,
**dadurch gekennzeichnet,**
**dass** die Ausnehmung (05) einen prismatischen, insbesondere rechteckigen oder quadratischen Befestigungsquerschnitt aufweist.

3. Beschlagteil nach Anspruch 1 oder 2,
**dadurch gekennzeichnet,**
**dass** die Befestigungseinrichtung zwei Druckfedern (09, 10) aufweist, die an gegenüberliegenden Seiten des Tragteils (03) reibschlüssig zur Anlage kommen können.

4. Beschlagteil nach Anspruch 3,
**dadurch gekennzeichnet,**
**dass** die beiden Druckfedern (09, 10) durch einen Verbindungssteg (11) miteinander verbunden sind und eine U-förmig Federklammer (08) bilden.

5. Beschlagteil nach Anspruch 4,
**dadurch gekennzeichnet,**
**dass** die Befestigungseinrichtung zwei U-förmige Federklammern (08) umfasst, wobei die vier Druckfederarme (09, 10) der Federklammern (08) an vier gegenüberliegenden Seiten des Tragteils (03) reibschlüssig zur Anlage kommen können.

6. Beschlagteil nach Anspruch 4 oder 5,
**dadurch gekennzeichnet,**
**dass** die freien Enden (14, 15) der Federklammer (08) umgebogen und an der zur Gefäßwandung (02) weisenden Seite des Grundkörpers (07) befestigt sind.

7. Beschlagteil nach Anspruch 6,
**dadurch gekennzeichnet,**
**dass** die freien Enden (14, 15) der Federklammer (08) am Grundkörper (07) angeschweißt sind.

8. Beschlagteil nach einem der Ansprüche 4 bis 7,
**dadurch gekennzeichnet,**
**dass** die Federklammer (08) zumindest ein Sicherungselement (12, 13) umfasst, dass in das Material des Tragteils (03) zumindest geringfügig eingreift und die Federklammer (08) formschlüssig am Tragteil (03) fixiert.

9. Beschlagteil nach Anspruch 8,
**dadurch gekennzeichnet,**
**dass** das Sicherungselement (12, 13) in der Art einer Sicherungskralle ausgebildet ist.

10. Beschlagteil nach Anspruch 9,
**dadurch gekennzeichnet,**
**dass** das freie Ende der Sicherungskralle (12, 13) bei der Montage des Tragteils (03) im Grundkörper (07) formschlüssig in die Oberfläche des Tragteils (03) eingegraben wird.

11. Beschlagteil nach Anspruch 10,
**dadurch gekennzeichnet,**
**dass** das freie Ende der Sicherungskralle (12, 13) unter einem Sperrwinkel von der Einführöffnung der Ausnehmung (05) weg weist.

12. Beschlagteil nach einem der Ansprüche 1 bis 11,
**dadurch gekennzeichnet,**
**dass** das Griffelement in der Art eines Stielgriffs ausgebildet ist, der an dem Grundkörper (07) befestigbar ist.

13. Beschlagteil nach einem der Ansprüche 1 bis 12,
**dadurch gekennzeichnet,**
**dass** der Grundkörper (07) in der Art eines Gussteils ausgebildet ist.

14. Beschlagteil nach einem der Ansprüche 1 bis 13,
**dadurch gekennzeichnet,**
**dass** das Tragteil (03) in der Art eines Gussteils ausgebildet ist.

15. Beschlagteil nach Anspruch 14,
**dadurch gekennzeichnet,**
**dass** das Tragteil (03) einstückig an die Gefäßwandung (02) angegossen ist.
